# EUROPÄISCHE PATENTSCHRIFT

(11) **EP 0 795 685 B1**
(45) Veröffentlichungstag und Bekanntmachung des Hinweises auf die Patenterteilung: **12.09.2001**
(21) Anmeldenummer: 97810078.2
(22) Anmeldetag: 13.02.1997
(51) Int. Cl.: F02C 7/16, F02C 7/18, F02C 3/30, F02C 6/00

(54) **Mehrstufige Gasturbine mit Dampfkühlung und -einleitung in die Brennkammer**
Multi-staged gas-turbine with steam cooling and feeding into the combustor
Turbine à gaz multi-étagée avec refroidissement par vapeur et réinjection en chambre de combustion

(30) Priorität: 14.03.1996 DE 19609912
(43) Veröffentlichungstag der Anmeldung: 17.09.1997
(73) Patentinhaber: ALSTOM (Schweiz) AG, 5400 Baden (CH)
(72) Erfinder: Frutschi, Hansulrich, 5223 Riniken (CH); Häusermann, Alfred, 5415 Rieden (CH)

(56) Entgegenhaltungen:
- EP-A- 0 684 369
- DE-C- 865 839
- GB-A- 2 236 145
- US-A- 3 359 723

## Beschreibung

### Technisches Gebiet

Die vorliegende Erfindung betrifft ein Verfahren zum Betrieb einer Kraftwerksanlage gemäss Oberbegriff des Anspruchs 1.

### Stand der Technik

Aus EP-A1-0 462 458 ist eine Kraftwerksanlage bekanntgeworden, welche im wesentlichen aus einer Gasturbogruppe, einem nachgeschalteten Abhitzedampferzeuger und einem Injektorsystem besteht. Die genannte Gasturbogruppe als autonome Einheit besteht komponentenmässig aus einem Generator, einem Verdichter, einer Brennkammer und einer Turbine. Die Abgase aus der Turbine werden dem Abhitzedampferzeuger zugeführt, wo sie energetisch weiter genutzt werden. Mit der freigesetzten thermischen Energie aus diesen Abgasen wird in einem Hochdruckteil des Abhitzedampferzeugers ein Hochdruckdampf erzeugt, der dem genannten Injektorsystem zugeführt wird, und dort dessen Treibdüse beaufschlagt. In die Fangdüse dieses Injektorsystems wird eine verdichtete Luft aus dem Verdichter eingeleitet: Diese Luft wird durch die Wirkung aus der Treibdüse weiterverdichtet. Ist der Abhitzedampferzeuger als Zweidruckkessel ausgelegt, so wird der im Niederdruckteil bereitgestellte Dampf beispielsweise der Brennkammer zugeführt. Diese Massnahmen haben primär den finalen Zweck, die Schadstoff-Emissionen, insbesondere die NOx-Emissionen, zu minimieren. Danebst ist es so, dass zwar die spezifische Leistung der Anlage steigt, die Wirkungsgradausbeute bleibt indessen relativ bescheiden, so dass sich eine solche Anlage betreffend Wirkungsgrad und auch spezifische Leistung keine Alternative gegenüber einer voll ausgebildeten Kombianlage darstellt.

Es ist aus der GB 2 236 145 bekannt, in einem Abhitzedampferzeuger wenigstens eine Dampfmenge zur Kühlung der Komponenten zu erzeugen, und diese Dampfmenge nach erfolgter Kühlung in den Brennräumen der Gasturbine in den Arbeitsgasstrom einzubringen. Dabei muss der Druck des Dampfes wenigstens in einer guten Näherung mit dem Arbeitsdruck der Gasturbine übereinstimmen. Dies hat selbstverständlich erhebliche Auswirkungen auf den Betrieb des Abhitzedampferzeugers und damit auf den möglichen Ausnutzungsgrad der Abgaswärme.

### Darstellung der Erfindung

Hier will die Erfindung Abhilfe schaffen. Der Erfindung, wie sie in den Ansprüchen gekennzeichnet ist, liegt die Aufgabe zugrunde bei einem Verfahren zum Betrieb einer Kraftwerksanlage der eingangs genannten Art den Wirkungsgrad, die spezifische Leistung und die Kühlwirkung durch Einleitung von Dampfmengen in die Gasturbogruppe zu maximieren, danebst die Schadstoff-Emissionen, insbesondere was die NOₓ-Emissionen betrifft, aus dem Betrieb einer solchen Kraftwerksanlage zu minimieren, und insbesondere eine Möglichkeit anzugehen, im Interesse des zu maximierenden Gesamtwirkungsgrades eine maximale Ausnutzung der Abgaswärme im Abhitzedampferzeuger zu gewährleisten.

Erfindungsgemäss wird der im Abhitzedampferzeuger generierte Dampf vorgängig der Verwendung zur Kühlung der Gasturbine in einer Strömungsmaschine unter Abgabe einer Nutzleistung teilexpandiert. Dies ermöglicht es, den Abhitzedampferzeuger mit wesentlich höheren Frischdampfdrücken zu betreiben, wodurch eine günstigere Betriebsweise bei bester Ausnutzung des kalorischen Potentials der Abgase realisiert werden kann. In einem weiteren Aspekt der Erfindung wird der Kühldampf nicht nur in den Brennkammern, sondern auch in den Turbinen bei niedrigerem Druck in den Arbeitsgasstrom eingeleitet. Dies ermöglicht es, auch einen Mitteldruckdampf und einen Flashdampf einer Economizerstufe des Abhitzedampferzeugers zur Kühlung einzusetzen, und an unterschiedlichen Stellen die Komponenten der Gasturbine mit jeweils druck- und temperaturangepasstem Dampf zu kühlen, und diesen an Stellen in den Arbeitsgasstrom einzuleiten, wo der Dampf und das Arbeitsgas kompatible thermodynamische Daten aufweisen. Die Abgaswärme und das Arbeitsvermögen des Dampfes werden dann nochmals besser ausgenutzt.

Die Grundschaltung der Gasturbogruppe ist vorliegend auf eine sequentielle Verbrennung ausgelegt. Indessen ist es nicht ausgeschlossen, die erfindungsgemässen Merkmale auf eine anders aufgebaute Gasturbogruppe zu übertragen. Eine auf sequentielle Verbrennung ausgelegte Gasturbogruppe eignet sich überraschenderweise in ganz besonderem Masse, die Einblasung eines in einem nachgeschalteten Abhitzedampferzeuger erzeugten Dampfes in deren Schaltung zu bewerkstelligen. Die hierbei erzielbaren Leistungen liegen, je nach Kreislaufanordnung, um einen Faktor zwei bis drei über der Leistung einer konventionellen Gasturbogruppe, die ohne Dampfeinblasung betrieben wird.

Des weiteren erreicht der Wirkungsgrad einer solchen mit Dampfeinblasung betriebenen Gasturbogruppe Werte, welche sehr nahe an jene einer modernen Kombianlage herankommen.

Ein weiterer wesentlicher Vorteil der Erfindung ist darin zu sehen, dass die spezifischen Kosten einer solchen Gasturbogruppe mit Dampfeinblasung wesentlich niedriger als jene einer Kombianlage ausfallen, womit sich auf dem Markt sehr gute Perspektiven ergeben.

Ein weiterer Vorteil der Erfindung ist darin zu sehen, dass der Wasserverbrauch einer solchen Anlage nur etwa zwei Drittel desjenigen eines modernen Dampfkreiswerkes mit Nasskühlturm beträgt; in etwa liegt der Wasserverbrauch dieser Anlage in gleicher Grössenordnung desjenigen einer Kombianlage gleicher Leistung. Zwar ist es richtig, dass das Wasser hierfür einer Teilaufbereitung unterzogen werden muss, deren Kosten fallen aber dermassen unerheblich aus, dass sie die Stromerzeugungskosten praktisch nicht beeinflussen.

Die zu erwartenden niedrigen spezifischen Anlagekosten, der hohe Wirkungsgrad und die schnelle Anfahr- und Belastungsmöglichkeit prädestinieren dieses Konzept in Anlagen anzuwenden, welche auf Mittel- und Spitzenlastbetrieb ausgelegt sind. Das Hauptanwendungsgebiet dürfte jedoch der Grundlastbetrieb sein.

Ferner wird durch eine gezielte Dampfeinblasung jene Konditionierung der Flammentemperatur in den Brennkammern erreicht, welche zu einer Minimierung der NOx-Emissionen führt, und das Arbeitsvermögen des Dampfes wird durch die druck- und temperaturangepasste Einblasung in der bestmöglichen Weise genutzt. Vorteilhafte und zweckmässige Weiterbildungen der erfindungsgemässen Aufgabenlösung sind in den weiteren Ansprüchen gekennzeichnet.

Im folgenden werden anhand der Zeichnungen Ausführungsbeispiele der Erfindung dargestellt und näher erläutert. Alle für das unmittelbare Verständnis der Erfindung nicht erforderlichen Elemente sind fortgelassen worden. Die Strömungsrichtung der Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: eine Schaltung einer Gasturbogruppe mit sequentieller Verbrennung, mit einem Abhitzedampferzeuger und einer Dampfeinblasung an geeigneter Stelle und
- Fig. 2: eine weitere Schaltung einer Gasturbogruppe gemäss Fig. 1, mit modifizierter Dampfeinblasung.

### Wege zur Ausführung der Erfindung, gewerbliche Verwendbarkeit

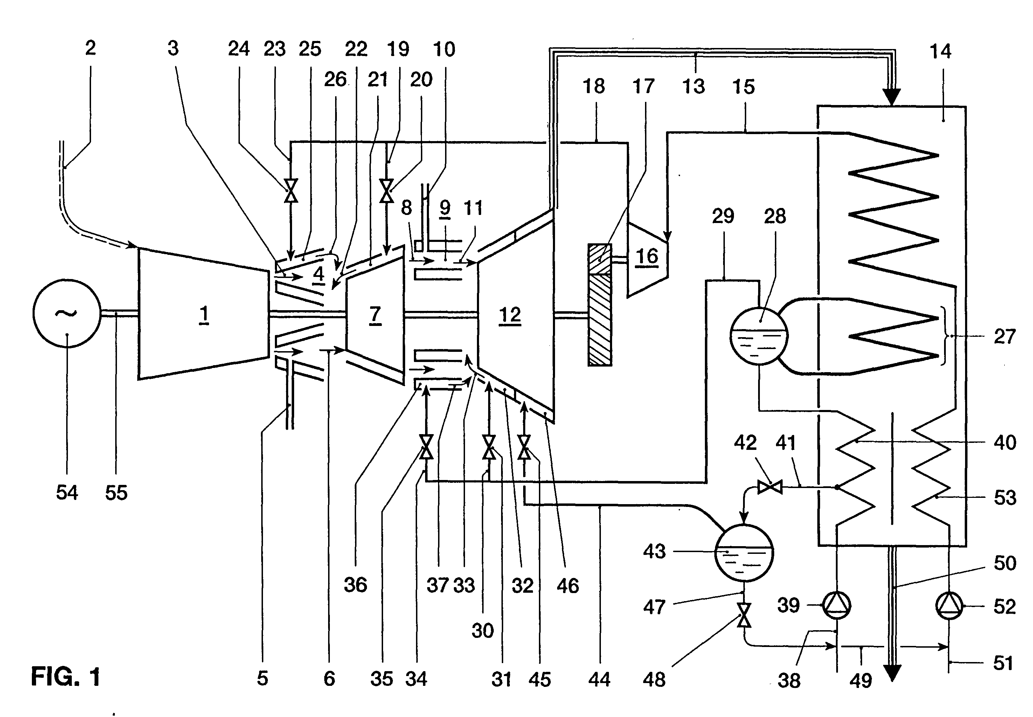

Fig. 1 zeigt eine Gasturbogruppe, welche mit einem Abhitzedampferzeuger 14 in Wirkverbindung steht, wobei der in diesem Abhitzedampferzeuger 14 bereitgestellte Dampf an geeigneter Stelle, direkt oder indirekt, in die Gasturbogruppe eingeblasen wird. Hinsichtlich der zum Einsatz gelangenden Brennstoffe zum Betreiben der Brennkammern ist folgendes zu sagen: Der notwendige Brennstoff kann beispielsweise durch eine mit der Gasturbogruppe zusammenwirkende Kohlenvergasung bereitgestellt werden. Selbstverständlich ist es auch möglich, die zum Einsatz gelangenden Brennstoffe aus einem Primärnetz zu beziehen. Wird die Versorgung eines gasförmigen Brennstoffes zum Betrieb der Gasturbogruppe über eine Pipeline beigestellt, so kann das Potential aus der Druck- und/oder Temperaturdifferenz zwischen Primärnetz und Verbrauchernetz für die Belange der Gasturbogruppe, oder allgemein der Anlage, durch geeignete Massnahmen rekuperiert werden. Die Gasturbogruppe als autonome Einheit besteht aus einem Verdichter 1, einer dem Verdichter 1 nachgeschalteten ersten Brennkammer 4, einer dieser Brennkammer 4 nachgeschalteten ersten Turbine 7, einer dieser Turbine 7 nachgeschalteten zweiten Brennkammer 9 und einer dieser Brennkammer 9 nachgeschalteten zweiten Turbine 12. Die genannten Strömungsmaschinen 1, 7, 12 weisen eine einheitliche Rotorwelle 55 auf, welche durch eine nicht ersichtliche Kupplung mit einem Generator 54 gekoppelt ist. Diese Rotorwelle 55 ist vorzugsweise auf zwei nicht gezeigten Lagern gelagert, welche vorzugsweise kopfseitig des Verdichters 1 und stromab der zweiten Turbine 12 angeordnet sind. Die Verdichterstufe kann je nach Auslegung, beispielsweise um die spezifische Leistung zu steigern, in zwei nicht gezeigte Teilverdichter mit einer dazwischen geschaltete Zwischenkühlung unterteilt werden. Die angesaugte Luft 2 strömt nach deren Verdichtung vorzugsweise in ein nicht gezeigtes Gehäuse, das in sich den Verdichteraustritt und die erste Turbine 7 einschliesst. In diesem Gehäuse ist auch die erste Brennkammer 4 untergebracht, welche vorzugsweise als zusammenhängende Ringbrennkammer ausgebildet ist und worin die verdichtete Luft 3 einströmt. Selbstverständlich kann die verdichtete Luft zum Betrieb der ersten Brennkammer 4 aus einer nicht gezeigten Luftspeicheranlage beigestellt werden. Die Ringbrennkammer 4 weist kopfseitig, auf den Umfang verteilt, eine Anzahl von nicht näher dargestellten Brennern auf, welche für die Verbrennung zuständig sind. An sich können hier Diffusionsbrenner zum Einsatz gelangen. Im Sinne einer Reduzierung der Schadstoff-Emissionen, insbesondere was die NOx-Emissionen betrifft, und zur Steigerung des Wirkungsgrades ist es vorteilhaft, eine Anordnung von Vormischbrennern gemäss EP-0 321 809 B1 vorzusehen, wobei der Patentgegenstand aus dieser Druckschrift integrierender Bestandteil dieser Beschreibung ist; darüber hinaus gilt dies auch hinsichtlich der dort beschriebenen Art der Brennstoffzuführung und der Zusammensetzung der Verbrennungsluft, beispielsweise mit einem rückgeführten Rauchgas angereichert, die in der vorliegenden Figur 1 über die Brennstoffzuführungen 5 resp. 10 zur Anwendung gelangen kann. Bezüglich Art der Zuführung und der Zusammensetzung der Verbrennungsluft gilt dies auch für die zweite Brennkammer 9. Was die Anordnung dieser Vormischbrenner in Umfangsrichtung der Ringbrennkanner 4 betrifft, so kann eine solche bei Bedarf von der üblichen Konfiguration gleicher Brenner abweichen, stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration disponiert ist. Die grossen Vormischbrenner, welche die Funktion von Hauptbrennern erfüllen, stehen zu den kleinen Vormischbrennern, welche die Pilotbrenner dieser Ringbrennkammer 4 sind, bezüglich der sie durchströmenden Verbrennungsluft, also im Normalfall der verdichteten Luft 3 aus dem Verdichter 1, in einem Grössenverhältnis, das fallweise festgelegt wird. Im gesamten Lastbereich der Ringbrennkammer 4 arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 4 sehr nahe an die Wirbelzentren der Pilotbrenner heran, so dass eine Zündung an sich nur mit den Pilotbrennern möglich ist. Beim Hochfahren wird die Brennstoffmenge 5, die über die Pilotbrenner zugeführt wird, soweit gesteigert, bis die Pilotbrenner ausgesteuert sind, d.h. bis die volle Brennstoffmenge zur Verfügung steht. Die Konfiguration wird so gewählt, dass dieser Punkt den jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert. Weil die durch die Pilotbrenner inizierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 4 aus einer Anzahl einzelner rohrförmiger Brennräume bestehen, welche allenfalls schrägringförmig, bisweilen auch schraubenförmig, um die Rotorachse angeordnet sind. Diese Ringbrennkammer 4, unabhängig von ihrer Auslegung, wird und kann geometrisch so angeordnet werden, dass sie auf die Rotorlänge praktisch keinen Einfluss ausübt. Auf die daraus resultierenden Vorteile aus einer solchen Disposition, wird weiter unten näher eingegangen. Die Heissgase 6 aus dieser Ringbrennkammer 4 beaufschlagen die unmittelbar nachgeschaltete erste Turbine 7, deren kalorisch entspannende Wirkung auf die Heissgase 6 bewusst minimal gehalten wird, d.h. diese Turbine 7 wird demnach aus nicht mehr als ein bis zwei Laufschaufelreihen bestehen. Bei einer solchen Turbine 7 wird nötig sein, einen Druckausgleich an den Stirnflächen zwecks Stabilisierung des Axialschubes vorzusehen. Die in Turbine 7 teilentspannten heissen Abgase 8, welche unmittelbar in die zweite Brennkammer 9 strömen, weisen aus dargelegten Gründen eine recht hohe Temperatur auf, vorzugsweise ist sie betriebsspezifisch so auszulegen, dass sie sicher noch um 1000°C beträgt. Diese zweite Brennkammer 9 hat im wesentlichen die Form eines zusammenhängenden ringförmigen axialen oder quasi-axialen Zylinders; sie kann selbstverständlich auch aus einer Anzahl axial, quasi-axial oder schraubenförmig angeordneten und in sich abgeschlossenen Brennräumen bestehen. Was die Konfiguration der ringförmigen, aus einem einzigen Brennraum bestehenden Brennkammer 9 betrifft, so sind in Umfangsrichtung dieses ringförmigen Zylinders mehrere Brennstofflanzen 10 disponiert, wobei sie selbstverständlich über eine nicht gezeigte Ringleitung miteinander verbunden sein können. Diese Brennkammer 9 weist an sich keinen Brenner auf: Die Verbrennung des in die aus der Turbine 7 kommenden heissen Abgase 8 eingedüsten Brennstoffes 10 geschieht hier durch Selbstzündung, soweit freilich das Temperaturniveau eine solche Betriebssart zulässt. Ausgehend davon, dass die Brennkammer 9 mit einem gasförmigen Brennstoff, also beispielsweise Erdgas, betrieben wird, muss für eine Selbstzündung eine Temperatur der heissen Abgase 8 aus der Turbine 7 um die 1000°C vorherrschen, und dies selbstverständlich auch bei Teillastbetrieb, was für die Auslegung dieser Turbine 7 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 9, vorzugsweise an der Innen- und Aussenwand, in Umfangsrichtung disponiert, eine Reihe von in der Figur nicht gezeigten Wirbel-Generatoren vorgesehen, welche in Strömungsrichtung vorzugsweise stromauf der Brennstofflanzen 10 angeordnet sind. Die Aufgabe dieser Wirbel-Generatoren besteht darin, Wirbel zu erzeugen, in welche dann der Brennstoff eingegeben wird, und welche dann weiter stromab eine stabilisierende Rückströmzone induzieren, analog derjenige aus den Vormischbrennern in der Ringbrennkammer 4. Da es sich bei dieser Brennkammer 9, aufgrund der axialen Anordnung und der Baulänge, um eine Hochgeschwindigkeitsbrennkammer handelt, deren mittlere Geschwindigkeit grösser ca. 60 m/s beträgt, müssen die wirbelerzeugenden Elemente, also die Wirbel-Generatoren, strömungskonform ausgebildet sein. Anströmungsseitig sollen diese vorzugsweise aus einer tetraederförmigen Form mit anströmungsschiefen Flächen bestehen. Die wirbelerzeugenden Elemente können, wie bereits erwähnt, entweder an der Aussenfläche oder an der Innenfläche der Brennkammer 9 plaziert sein, oder beiderorts wirken. Die schiefen Flächen zwischen den aussenliegenden und innenliegenden wirbelerzeugenden Elementen sind vorzugsweise spiegelbildlich angeordnet, dergestalt, dass der Durchflussquerschnitt in der Brennkammer 9 stromab dieses Ortes im Bereich der Eindüsung des Brennstoffes 10 eine eine Rückströmung erzeugende Erweiterung erfährt. Selbstverständlich können die wirbelerzeugenden Elemente auch axial zueinander verschoben sein. Die abströmungsseitige Fläche der wirbelerzeugenden Elemente ist im wesentlichen senkrecht auf die Innenwand gerichtet, so dass sich ab dort die angestrebte Rückströmzone einstellen kann. Hinsichtlich der spezifischen Ausgestaltung der Wirbel-Generatoren wird auf die Druckschrift EP-0 619 133 A1 verwiesen, welche integrierender Bestandteil dieser Beschreibung ist. Die Selbstzündung in der Brennkammer 9 muss indessen bei verschiedenen Brennstoffen auch in den transienten Lastbereichen sowie im Teillastbereich der Gasturbogruppe gesichert bleiben, d.h. es müssen Hilfsvorkehrungen vorgesehen werden, welche die Selbstzündung in der Brennkammer 9 auch dann sicherstellen, wenn sich allenfalls eine Flexion der Temperatur der heissen Abgase 8 im Bereich der Eindüsung des Brennstoffes 10 einstellen sollte. Um dies zu gewährleisten, kann diesem Brennstoff eine kleine Menge eines anderen Brennstoffes mit einer niedrigeren Zündtemperatur beigegeben werden. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und löst auch dann eine Selbstzündung in der Brennkammer 9 aus, wenn die heissen Abgase 8 aus der ersten Turbine 7 eine Temperatur unterhalb des angestrebten optimalen Niveaus aufweisen sollten. Diese Vorkehrung, Brennöl zur Sicherstellung einer Selbstzündung vorzusehen, erweist sich freilich immer dann als besonders angebracht, wenn die Gasturbogruppe mit reduzierter Last betrieben wird. Diese Vorkehrung trägt des weiteren entscheidend dazu bei, dass die Brennkammer 9 eine minimale axiale Länge aufweisen kann. Die kurze Baulänge der Brennkammer 9, die Wirkung der gewürdigten Wirbel-Generatoren zur Gemischbildung sowie Flammenstabilisierung und die fortwährende Sicherstellung der Selbstzündung sind ursächlich dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich auf eine optimierte Kühlung der Strukturen dieser Brennkammer 9 niederschlägt. Die in der Brennkammer 9 aufbereiteten Heissgase 11 beaufschlagen anschliessend eine nachgeschaltete zweite Turbine 12. Die thermodynamischen Kennwerte der Gasturbogruppe können so ausgelegt werden, dass die Abgase 13 aus der zweiten Turbine 12 noch soviel kalorisches Potential aufweisen, um damit einen nachgeschalteten Abhitzedampferzeuger 14 zu betreiben. Wie bereits bei der Beschreibung der Ringbrennkammer 4 hingewiesen wurde, ist diese geometrisch so angeordnet, dass sie auf die Rotorlänge praktisch keinen Einfluss ausübt. Des weiteren konnte festgestellt werden, dass die zweite Brennkammer 9 zwischen Abströmungsebene der ersten Turbine 7 und Anströmungsebene der zweiten Turbine 12 eine minimale Länge einnimmt. Da ferner die Entspannung der Heissgase 6 in der ersten Turbine 7, aus dargelegten Gründen, über wenige Laufschaufelreihen geschieht, lässt sich eine kompakte Gasturbogruppe bereitstellen. Es ist zur Steigerung des Wirkungsgrades der Gasturbogruppe von Vorteil, wenn vor der zweiten Brennkammer 9 ein in der Figur nicht ersichtlicher Kleindiffusor vorgesehen wird. Damit liesse sich der Totaldruckverlust im Gesamtsystem vermindern. Es lässt sich anhand der üblichen Diffusorauslegungsdiagramme beweisen, dass sich bereits bei einer minimalen Länge des Diffusors grosse Rückgewinnungsraten des dynamisches Druckes erreichen lassen. Wie oben dargelegt, können die Verdichterstufen mit einer Zwischenkühlung ausgestattet sein. Um bei der Zugrundelegung einer solchen die geometrische Grundkonzeption der Gasturbogruppe, wie sie in Figur dargestellt ist, nicht zu alterieren, wird vorgeschlagen, einen in der Figur nicht ersichtlichen Zwischenkühler vorzusehen, der innerhalb des Statorgehäuses und in unmittelbarer Strömungsrichtung der Verdichterstufen plaziert ist. Die Kühlung bei diesem Zwischenkühler geschieht mittelbar oder unmittelbar. Bei unmittelbarer Zwischenkühlung kann dies beispielsweise durch ein Aggregat geschehen, dessen Betrieb auf Verdunstung des eingedüsten Wassers ausgelegt ist. Somit ergibt sich die Konfiguration, dass übliche Verbindungsleitungen zu einem ausserhalb des Statorgehäuses plazierten Zwischenkühler, und von diesem Zwischenkühler zurück durch das Statorgehäuse zur nächsten Verdichterstufe völlig entfallen. Die Abgase 13 aus der zweiten Turbine 12 durchströmen, wie bereits dargelegt, den Abhitzedampferzeuger 14, und werden dann als Rauchgase 50 abgeleitet. Der Abhitzedampferzeuger 14 stellt zwei Arten von Dampf zur Verfügung. Ein Teil davon betrifft eine Dampfmenge, die als Speisewasser 51 über eine Förderpumpe 52 zunächst eine erste Economizerstufe 53 durchläuft, um alsdann als überhitzter Dampf 15 eine Gegendruckturbine 16 zu beaufschlagen. Die durch die Gegendruckturbine 16 erzeugte Arbeit kann entweder, wie dargestellt, über ein Getriebe 17 auf die Rotorwelle 55 übertragen werden, wobei diese dem gemeinsamen Generator 54 zufliesst, oder es wird direkt ein mit der aus aerodynamischen Gründen übersynchron drehenden Gegendruckturbine 3 gekuppelter Generator über Umrichter mit dem Netz verbunden. Die direkte Kupplung über ein Getriebe bietet die Möglichkeit, mit Dampf direkt anzufahren, sofern solcher verfügbar ist. Aber auch eine elektrische Verbindung der beiden Generatoren lässt ein Anfahren mit Dampf zu. Ein Teil 19 des aus der genannten Dampfturbine 16 abströmenden Gegendruckdampfes 18 strömt über ein Regelorgan 20 durch die zu kühlenden heissen Strukturen 21, beispielsweise durch den Stator, der ersten Turbine 7; ein anderer Teil 23 strömt ebenfalls über ein Regelorgan 24 und dient der Kühlung der heissen Strukturen 25 der ersten Brennkammer 4. Diese Kühldampfmengen 22, 26 werden im Wärmeaustausch mit den zu kühlenden Strukturen stark überhitzt, und schliesslich zusammen mit der vom Verdichter 1 kommenden Druckluft 3 durch offene Verbrennung des Brennstoffes 5 auf die verlangte Mischtemperatur am Eintritt in die erste Turbine 7 gebracht. Die Einbringung der genannten Kühldampfmengen 22, 26 in den Arbeitsluftstrom des Gasturbinenprozesses kann auch, mindestens teilweise, stromab der Brennstoffeindüsung vorgenommen werden. Selbstverständlich kann ein Teil des Dampfes 19 auch der Kühlung rotierender heisser Strukturen dienen. Eine ebenfalls im Abhitzedampferzeuger 14 angeordnete Verdampfereinrichtung 27 dient über eine Trommel 28 der Erzeugung eines Mittel-druckdampfes 29, der der Kühlung der heissen Strukturen der zweiten Brennkammer 9 und der zweiten Turbine 12 dient. Ein Teil 30 dieses Mitteldruckdampfes strömt über ein Regelorgan 31 in die zu kühlenden heissen Strukturen 32 des vorderen Teils der zweiten Turbine 12; der andere Teil 34 strömt ebenfalls über ein Regelorgan 35 in die zu kühlenden heissen Strukturen 36 der zweiten Brennkammer 9. Diese Kühldampfmengen 33, 37 werden zusammen mit den teilentspannten Heissgasen 8 aus der ersten Turbine 7 durch Brennstoff 10 in offener Verbrennung auf die verlangte Mischtemperatur am Eintritt in die zweite Turbine 12 gebracht. Selbstverständlich kann auch hier die Einbringung der genannten Kühldampfmengen 33, 37 in den Arbeitsluftstrom des Gasturbinenprozesses, mindestens teilweise, stromab der Brennstoffeindüsung vorgenommen werden. Auch hier kann ein Teil des Dampfes 29 der Kühlung rotierender heisser Strukturen dienen. Schliesslich kann durch Flashdampf 44 aus einer Ausdampfflasche 43, welche in Wirkverbindung mit einer zweiten Economizerstufe 40 im Abhitzedampferzeuger steht, eine Kühlung der heissen Strukturen des hinteren Teils 46 der zweiten Turbine 12 vorgenommen werden, wo auch ein tieferer Dampfdruck ausreicht. Auch dieser Flashdampf 44 durchströmt vor seinem Einsatz ein Regelorgan 45. Die genannte zweite Economizerstufe 40 im Abhitzedampferzeuger 14 wird über eine Förderpumpe 39 mit Speisewasser 38 gespiesen. Dabei wird hier eine über 100% erhöhte Speisewassermenge in diese Economizerstufe 40 eingegeben, wobei mit 100% jene Nennwassermenge angesehen wird, welche in Abhängigkeit zu der von den Abgasen 13 angebotenen Energie steht. Der Anteil 41 über 100% der Speisewassermenge wird an geeigneter Stelle aus der Economizerstufe 40 abgezweigt und über ein Regelorgan 42 in die bereits erwähnte Ausdampfflasche 43, aus welcher dann der bereits umschriebene Flashdampf 44 auströmt. Die Nennwassermenge strömt sodann in die bereits umschriebene Trommel 28. Ein Abwasser 47 strömt über ein Regelorgan 48 aus der Ausdampfflasche 43 und speist das Speisewasser 38 zur zweiten Economizerstufe 40 resp. über eine Zuleitung 49 das Speisewasser 51 zur ersten Economizerstufe 53. In beiden Fällen wärmt dieses Abwasser die genannten Speisewassermengen durch Mischung angemessen vor, so dass keine Tieftemperaturkorrosionen zu befürchten sind. Die geschickte Abstufung zur Erzeugung der verschiedenen Dämpfe 15, 29, 44 innerhalb des Abhitzedampferzeugers 14 ermöglicht eine weitestgehende Ausnützung der Exergie der Abgase 13 bis hinunter zu einer Kamintemperatur im Bereich von 100°C.

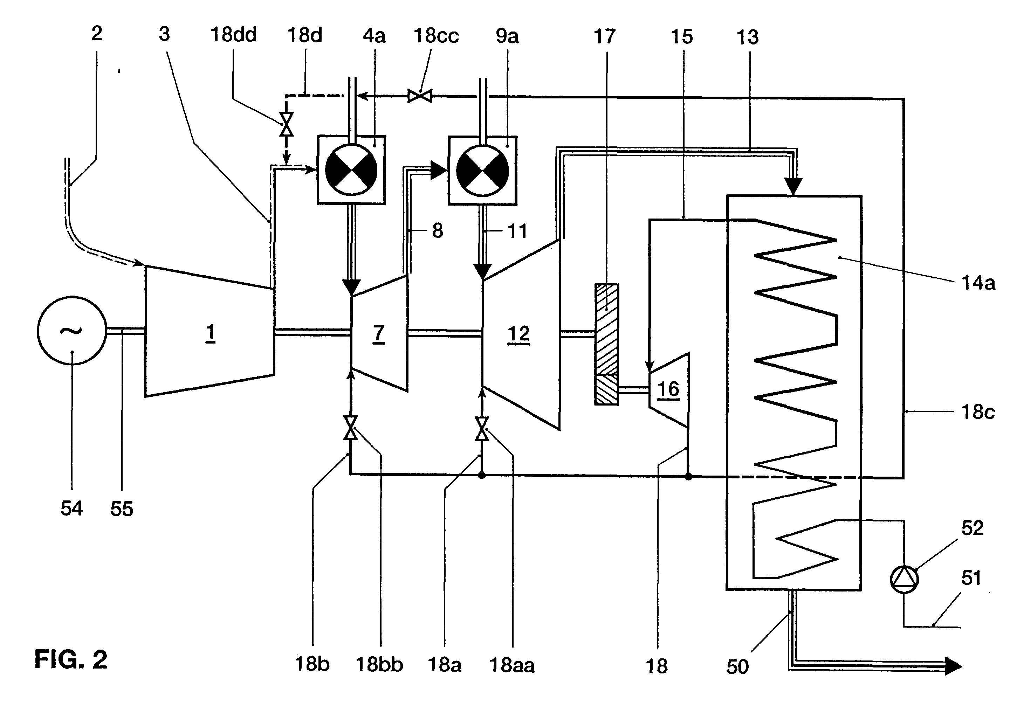

Fig. 2 zeigt eine im wesentlichen ähnliche Kraftwerksanlage, wie sie unter Fig. 1 dargestellt und beschrieben worden ist. Die Gasturbogruppe operiert auch hier nach einer sequentiellen Verbrennung, wobei die Brennkammern 4a, 9a nicht notwendigerweise nach der Technik gemäss Fig. 1 ausgelegt zu sein brauchen. Auch hier werden die Abgase 13 aus der letzten Turbine 12 in einen Abhitzedampferzeuger 14a eingeleitet, der aber an sich von einfacherem Aufbau gegenüber demjenigen aus Fig. 1 ist. Die Zuleitung von Speisewasser 51 über Förderpumpe 52 in den Abhitzedampferzeuger 14a geschieht kontinuierlich, dergestalt, dass ein überhitzter Dampf 15 gebildet wird, der in analoger Weise zur Schaltung gemäss Fig. 1 zunächst eine Gegendruckturbine 16 beaufschlagt. Die durch diese Turbine erzeugte Arbeit wird vorzugsweise über ein Getriebe 17 auf die Rotorwelle 55 übertragen, wobei diese einem gemeinsamen Generator 54 zufliesst. Der aus der genannte Dampfturbine 16 abströmende Gegendruckdampf 18 teilt sich über mehrere mit Regelorganen 18aa, 18bb, 18cc, 18dd bestückte Stränge auf, die vorzugsweise die kalorisch belasteten Strukturen der Gasturbogruppe kühlen, so die Stränge 18a und 18b für die zweite Turbine 12 resp. die erste Turbine 7, oder allenfalls als Zumischungdampfmengen 18c und 18d für die erste Brennkammer 4a resp. für die Druckluft 3. Die durch Kühlwirkung überhitzten Dampfmengen 18a, 18b können dann an geeigneter Stelle in den jeweiligen Arbeitsluftstrom eingeleitet werden. Die genannten Regelorgane sorgen dafür, dass die Dampfeinbringung an verschiedenen Stellen der Gasturbogruppe spezifisch erfolgen kann. Auch bei diesem Abhitzedampferzeuger 14a gilt die Vorgabe, eine weitestgehende Ausnützung der Exergie der Abgase 13 bis hinunter zu einer tieferen Temperatur der Rauchgase 50 zu bewerkstelligen.
Für beide beschriebenen Kraftwerksanlagen bringt die Erzeugung von überkritischem Dampf bie besten Resultate.

### Bezugszeichenliste

- 1: Verdichter
- 2: Angesaugte Luft
- 3: Verdichtete Luft
- 4: Erste Brennkammer
- 4a: Erste Brennkammer
- 5: Brennstoff, Brennstoffzuführung
- 6: Heissgase
- 7: Erste Turbine
- 8: Heisse Abgase
- 9: Zweite Brennkammer
- 9a: Zweite Brennkammer
- 10: Brennstoff, Brennstoffzuführung, Brennstofflanze
- 11: Heissgase
- 12: Zweite Turbine
- 13: Abgase
- 14: Abhitzedampferzeuger
- 14a: Abhitzedampferzeuger
- 15: Ueberhitzter Dampf
- 16: Gegendruckturbine, Dampfturbine
- 17: Getriebe
- 18: Gegendruckdampf
- 18a-d: Gegendruckdampfmengen
- 18aa-dd: Regelorgane
- 19, 23: Gegendruckdampfmengen
- 20, 24: Regelorgane
- 21: Kalorisch belastete Strukturen der Turbine 7
- 22: Kühldampfmenge aus 21
- 25: Kalorisch belastete Strukturen der Brennkammer 4
- 26: Kühldampfmenge aus 25
- 27: Verdampfereinrichtung
- 28: Trommel
- 29: Mitteldruckdampf
- 30, 34: Mitteldruckdampfmengen
- 31, 35: Regelorgane
- 32: Kalorisch belastete Strukturen der Turbine 12
- 33: Kühldampfmenge aus 32
- 36: Kalorisch belastete Strukturen der Brennkammer 9
- 37: Kühldampfmenge aus 36
- 38: Speisewasser zur Economizerstufe 40
- 39: Förderpumpe
- 40: Economizerstufe
- 41: Entnahme Speisewasseranteil über 100% aus 40
- 42: Regelorgan
- 43: Ausdampfflasche
- 44: Flashdampf
- 45: Regelorgan
- 46: Kalorisch belastete Strukturen der Turbine 12
- 47: Abwasser
- 48: Regelorgan
- 49: Zuleitung Abwasser
- 50: Rauchgase
- 51: Speisewasser zur Economizerstufe 53
- 52: Förderpumpe
- 53: Economizerstufe
- 54: Generator
- 55: Rotorwelle

## Patentansprüche

1. Verfahren zum Betrieb einer Kraftwerksanlage, im wesentlichen bestehend aus einer Gasturbogruppe, einem der Gasturbogruppe nachgeschalteten Abhitzedampferzeuger, wobei die Gasturbogruppe aus wenigstens einer Verdichtereinheit, wenigstens einer Brennkammer, wenigstens einer Turbine, und wenigstens einem Generator besteht, und wobei die Abgase aus der letzten Turbine den Abhitzedampferzeuger durchströmen, in welchem die Erzeugung mindestens eines Dampfes stattfindet, wobei mindestens ein Teil des mittelbar oder unmittelbar im Abhitzedampferzeuger (14, 14a) erzeugten Dampfes (15, 29, 44) zur Kühlung mindestens einer thermisch belasteten Struktur (21, 25, 32, 36, 46) der Gasturbogruppe eingesetzt wird, und wobei die Kühldampfmenge (22, 26, 33, 37) nach erfolgter Kühlung mittelbar oder unmittelbar in einen Arbeitsgasstrom (3, 6, 8, 11) des Gasturboprozesses eingeleitet wird, **dadurch gekennzeichnet, dass** die Kühl dampf menge vorgängig der Kühlung in einer Strömungsmaschine unter Abgabe einer Nutzleistung teilentspannt wird.

2. Verfahren nach Anspruch 1, **dadurch gekennzeichnet, dass** die Gasturbogruppe mit einer sequentieller Verbrennung (4, 9) betrieben wird.

3. Verfahren nach einem der Ansprüche 1 oder 2, **dadurch gekennzeichnet, dass** wenigstens ein Teil des Kühldampfes stromab einer Brennkammer in den Arbeitsgasstrom eingebracht wird.

4. Verfahren nach den Ansprüchen 1-3, **dadurch gekennzeichnet, dass** mit dem in dem Abhitzedampferzeuger (14, 14a) bereitgestellten Dampf die kalorisch belasteten hochdruckseitigen Strukturen (21, 25) der Gasturbogruppe gekühlt werden.

5. Verfahren nach Anspruch 4, **dadurch gekennzeichnet, dass** die Kühldampfmengen (22, 26) nach erfolgter Kühlung in einen hochdruckseitigen Arbeitsluftstrom (3, 6) des Gasturboprozesses eingeleitet werden.

6. Verfahren nach Anspruch 1, **dadurch gekennzeichnet, dass** in dem Abhitzedampferzeuger (14) eine weitere Verdampfereinrichtung (27) operiert, aus welcher ein Mitteldruckdampf (29) bereitgestellt wird.

7. Verfahren nach Anspruch 6, **dadurch gekennzeichnet, dass** mit dem Mitteldruckdampf (29) die kalorisch belasteten niederdruckseitigen Strukturen (32, 36, 46) der Gasturbogruppe gekühlt werden.

8. Verfahren nach Anspruch 7, **dadurch gekennzeichnet, dass** eine Kühldampfmenge (33, 37) nach erfolgter Kühlung in einen niederdruckseitigen Arbeitsluftstrom (8, 11) des Gasturboprozesses eingeleitet werden.

9. Verfahren nach Anspruch 1, **dadurch gekennzeichnet, dass** in dem Abhitzedampferzeuger (14) mindestens eine Economizerstufe (40) operiert, durch welche anfänglich eine Speisewassermenge (38) grösser 100% strömt, und dass der Anteil (41) über 100% an geigneter Stelle abgeführt und in eine Ausdampfflasche (43) zur Bildung eines weiteren Dampfes (44) geleitet wird.

10. Verfahren nach Anspruch 9, **dadurch gekennzeichnet, dass** der Dampf (44) zur Kühlung von kalorisch belasteten niederdruckseitigen Strukturen (46) der Gasturbogruppe eingesetzt wird.

## Claims

1. Method of operating a power station plant, essentially comprising a gas-turbine group and a waste-heat steam generator arranged downstream of the gas-turbine group, the gas-turbine group comprising at least one compressor unit, at least one combustion chamber, at least one turbine and at least one generator, and the exhaust gases from the last turbine flowing through the waste-heat steam generator, in which the generation of at least one steam portion takes place, wherein at least one portion of the steam (15, 29, 44) generated indirectly or directly in the waste-heat steam generator (14, 14a) is used to cool at least one thermally loaded structure (21, 25, 32, 36, 46) of the gas-turbine group, and wherein the cooling-steam quantity (22, 26, 33, 37), after cooling is effected, is directed indirectly or directly into a working-gas flow (3, 6, 8, 11) of the gas-turbine process, **characterized in that** the quantity of cooling steam is partly expanded, giving up useful power, before being used for cooling in a turbomachine.

2. Method according to Claim 1, **characterized in that** the gas-turbine group is operated with sequential combustion (4, 9).

3. Method according to either of Claims 1 and 2, **characterized in that** at least part of the cooling steam is introduced into the working-gas stream downstream of a combustion chamber.

4. Method according to Claims 1 to 3, **characterized in that** the thermally loaded structures (21, 25) of the gas-turbine group which are on the high-pressure side are cooled by the steam prepared in the waste-heat steam generator (14, 14a).

5. Method according to Claim 4, **characterized in that** the cooling-steam quantities (22, 26), after cooling is effected, are directed into a working-air flow (3, 6) of the gas-turbine process on the high-pressure side.

6. Method according to Claim 1, **characterized in that** a further evaporator device (27) operates in the waste-heat steam generator (14), from which evaporator device (27) intermediate-pressure steam (29) is provided.

7. Method according to Claim 6, **characterized in that** the thermally loaded structures (32, 36, 46) of the gas-turbine group which are on the low-pressure side are cooled by the intermediate-pressure steam (29).

8. Method according to Claim 7, **characterized in that** a cooling-steam quantity (33, 37), after cooling is effected, is directed into a working-air flow (8, 11) of the gas-turbine process on the low-pressure side.

9. Method according to Claim 1, **characterized in that** at least one economizer stage (40) operates in the waste-heat steam generator (14), through which economizer stage (40) a feed-water quantity (38) greater than 100% flows at first, and in that the proportion (41) above 100% is drawn off at a suitable point and directed into an evaporation flask (43) for forming further steam (44).

10. Method according to Claim 9, **characterized in that** the steam (44) is used for cooling the thermally loaded structures (46) of the gas-turbine group which are on the low-pressure side.

## Revendications

1. Procédé de conduite d'une installation de production d'électricité essentiellement constituée d'un groupe à turbine à gaz, d'un surchauffeur de vapeur raccordé en aval du groupe à turbine à gaz, le groupe à turbine à gaz étant constitué d'au moins une unité de compresseur, d'au moins une chambre de combustion, d'au moins une turbine et d'au moins un générateur, et les gaz d'échappement sortant de la dernière turbine traversant le surchauffeur de vapeur dans lequel a lieu la création d'au moins une vapeur, et au moins une partie de la vapeur (15, 29, 44) créée directement ou indirectement dans le surchauffeur de vapeur (14, 14a) étant utilisée pour le refroidissement d'au moins une structure thermiquement sollicitée (21, 25, 32, 36, 46) du groupe à turbine à gaz, et la quantité de vapeur de refroidissement (22, 26, 33, 37) étant amenée directement ou indirectement dans un écoulement de gaz de travail (3, 6, 8, 11) du processus de la turbine à gaz lorsque le refroidissement a été réalisé, **caractérisé en ce que** la quantité de vapeur de refroidissement est partiellement détendue dans une turbomachine en délivrant une puissance utile avant le refroidissement.

2. Procédé selon la revendication 1, **caractérisé en ce que** le groupe à turbine à gaz est conduit avec une combustion séquentielle (4, 9).

3. Procédé selon l'une des revendications 1 ou 2, **caractérisé en ce qu'**au moins une partie de la vapeur de refroidissement est injectée dans l'écoulement de gaz de travail en aval d'une chambre de combustion.

4. Procédé selon les revendications 1 à 3, **caractérisé en ce que** les structures thermiquement sollicitées (21, 25) du côté des hautes pressions du groupe à turbine à gaz sont refroidies par la vapeur préparée dans le surchauffeur de vapeur (14, 14a).

5. Procédé selon la revendication 4, **caractérisé en ce que**, lorsque le refroidissement a été réalisé, les quantités de vapeur de refroidissement (22, 26) sont introduites dans un écoulement d'air de travail (3, 6) du côté des hautes pressions du processus de la turbine à gaz.

6. Procédé selon la revendication 1, **caractérisé en ce qu'**un autre dispositif de vaporisation (27) qui prépare une vapeur (29) à pression moyenne opère dans le surchauffeur de vapeur (14).

7. Procédé selon la revendication 6, **caractérisé en ce que** les structures thermiquement sollicitées (32, 36, 46) du côté basse pression du groupe à turbine à gaz sont refroidies par la vapeur (29) à pression moyenne.

8. Procédé selon la revendication 7, **caractérisé en ce que**, lorsque le refroidissement a été réalisé, une quantité de vapeur de refroidissement (33, 37) est introduite dans un écoulement d'air de travail (8, 11) du côté basse pression du processus de la turbine à gaz.

9. Procédé selon la revendication 1, **caractérisé en ce qu'**au moins un étage d'économiseur (40), qui est initialement traversé par une quantité d'eau d'alimentation (38) supérieure à 100%, opère dans le surchauffeur de vapeur (14), et en ce que la partie (41) supérieure à 100% est extraite en un emplacement approprié et est conduite dans une bouteille de vaporisation (43) en vue de la formation d'une vapeur supplémentaire (44).

10. Procédé selon la revendication 9, **caractérisé en ce que** la vapeur (44) est utilisée pour refroidir des structures thermiquement sollicitées (46) du côté basse pression du groupe à turbine à gaz.
